# EUROPÄISCHE PATENTSCHRIFT

(11) **EP 3 966 052 B1**
(45) Veröffentlichungstag und Bekanntmachung des Hinweises auf die Patenterteilung: **26.06.2024**
(21) Anmeldenummer: 20725622.3
(22) Anmeldetag: 24.04.2020
(51) Int. Cl.: B60G 17/052

(54) **VERFAHREN ZUM BETREIBEN EINES FAHRZEUGS UND ZUR STEUERUNG EINER LUFTFEDERUNGSANLAGE FÜR DAS FAHRZEUGS**
METHOD FOR OPERATING A VEHICLE AND FOR CONTROLLING AN AIR SUSPENSION SYSTEM FOR THE VEHICLE
PROCÉDÉ D'EXPLOITATION D'UN VÉHICULE ET DE COMMANDE D'UNE INSTALLATION DE SUSPENSION PNEUMATIQUE POUR LE VÉHICULE

(30) Priorität: 10.05.2019 DE 102019112214
(43) Veröffentlichungstag der Anmeldung: 16.03.2022
(73) Patentinhaber: ZF CV Systems Europe BV, 1170 Brussels (BE)
(72) Erfinder: AKCAM, Halil, 30161 Hannover (DE); JERMIS, Sebastian, 30171 Hannover (DE)
(74) Vertreter: Ohlendorf, Henrike
(86) Internationale Anmeldenummer: PCT/EP2020/061432
(87) Internationale Veröffentlichungsnummer: WO 2020/229139

(56) Entgegenhaltungen:
- EP-A2- 0 170 794
- EP-A2- 1 123 822
- DE-A1- 3 915 966
- DE-A1- 19 546 324
- DE-A1-102004 051 740
- JP-A- H0 370 615

## Beschreibung

Die Erfindung betrifft ein Verfahren zum Betreiben eines Fahrzeugs und zur Steuerung einer Luftfederungsanlage für das Fahrzeug, wobei die Luftfederungsanlage für die Luftfedern einer Fahrzeugachse oder mehrerer benachbarter Tandemachsen jeweils ein Umschaltventil sowie für die Luftfeder jedes Fahrzeugrades der Fahrzeugachse beziehungsweise für die Luftfedern jeder Fahrzeugseite der Tandemachsen jeweils ein Absperrventil aufweist, und bei der das jeweilige Umschaltventil sowie die Absperrventile in einem entfernt von den Luftfedern angeordneten Ventilblock baulich zusammengefasst sind, wobei die Luftfederungsanlage für die Messung der Balgdrücke in den Federbälgen der Luftfedern jeweils einen Drucksensor aufweist, welche in oder an dem Ventilblock angeordnet sind, wobei die Drucksensoren jeweils am Ausgang des ihnen zugeordneten Absperrventils an die Anschlussleitung des Federbalgs der zugeordneten Luftfeder beziehungsweise der Federbälge der zugeordneten Luftfedern angeschlossen sind, und bei der mittels der Messwerte der Drucksensoren der Balgdruck in den Federbälgen der Luftfedern exakt auf einen Zieldruck einstellbar ist.

Die Luftfederungsanlage eines Fahrzeugs weist üblicherweise für die Luftfedern einer Fahrzeugachse oder mehrerer benachbarter Tandemachsen jeweils ein bevorzugt als ein 3/2-Wege-Magnetschaltventil ausgebildetes Umschaltventil und für die Luftfeder jedes Fahrzeugrades der Fahrzeugachse beziehungsweise für die Luftfedern jeder Fahrzeugseite der Tandemachsen jeweils ein bevorzugt als ein 2/2-Wege-Magnet-schaltventil ausgebildetes Absperrventil auf. Über das Umschaltventil ist eine Arbeitsdruckleitung wechselweise mit einem Entlüftungsausgang oder einer druckführenden Vorratsleitung verbindbar. An die Arbeitsdruckleitung sind, zum Beispiel mittels eines T-Leitungsstücks, die beiden Absperrventile angeschlossen, über die jeweils eine zu dem Federbalg der zugeordneten Luftfeder beziehungsweise zu den Federbälgen der zugeordneten Luftfedern führende Anschlussleitung wechselweise mit der Arbeitsdruckleitung verbindbar oder gegenüber dieser absperrbar ist.

Im unbetätigten, also unbestromten Zustand des Umschaltventils ist die Arbeitsdruckleitung mit dem Entlüftungsausgang verbunden und somit drucklos. Im betätigten, also bestromten Zustand des Umschaltventils ist die Arbeitsdruckleitung mit der Vorratsleitung verbunden und steht somit unter einem von einer Druckluftanlage zur Verfügung gestellten Vorratsdruck. Im unbetätigten, also unbestromten Zustand der Absperrventile sind diese jeweils geschlossen und die Anschlussleitungen gegenüber der Arbeitsdruckleitung abgesperrt. Zur Absenkung des Balgdruckes in dem Federbalg der zugeordneten Luftfeder beziehungsweise in den Federbälgen der zugeordneten Luftfedern ist nur das Öffnen des betreffenden Absperrventils erforderlich, wodurch der jeweilige Federbalg entlüftet wird beziehungsweise die jeweiligen Federbälge entlüftet werden. Zur Erhöhung des Balgdruckes in dem Federbalg der zugeordneten Luftfeder beziehungsweise in den Federbälgen der zugeordneten Luftfedern ist dagegen das Umschalten des Umschaltventils und das Öffnen des betreffenden Absperrventils erforderlich, wodurch der jeweilige Federbalg belüftet wird beziehungsweise die jeweiligen Federbälge belüftet werden.

Zur Ermittlung der Höhe beziehungsweise des Niveaus des Fahrzeugaufbaus gegenüber einer Fahrzeugachse ist an jeder Fahrzeugachse beziehungsweise bei benachbarten Tandemachsen zumindest an einer der Tandemachsen beidseitig jeweils ein Höhen- oder Niveausensor angeordnet, der über eine Sensorleitung mit einem elektronischen Steuergerät verbunden ist. Zur Ermittlung der Balgdrücke in den Federbälgen der Luftfedern ist an die Anschlussleitung jedes Federbalgs einer Fahrzeugachse beziehungsweise bei Tandemachsen der Federbälge einer Fahrzeugseite ein Drucksensor angeschlossen, der über eine Sensorleitung mit dem elektronischen Steuergerät verbunden ist. Abhängig von den Sensorsignalen der Höhensensoren und der Drucksensoren sowie von einem Steuerungsprogramm vorgegebenen oder manuell durch einen Fahrer eingegebenen Solldaten werden die Umschalt- und Absperrventile von dem elektronischen Steuergerät über elektrische Steuerleitungen angesteuert, um durch die Belüftung oder Entlüftung der Federbälge der betreffenden Luftfedern eine vorgegebene Höhe des Fahrzeugaufbaus beizubehalten oder einzustellen.

Die Drucksensoren können unmittelbar benachbart zu den Luftfedern an die jeweilige Anschlussleitung angeschlossen sein. Dies hat den Vorteil, dass der jeweilige Balgdruck in dem Federbalg der benachbarten Luftfeder auch bei dynamischen Druckänderungen weitgehend unverfälscht messbar ist. Nachteilig an einer derartigen dezentralen Anordnung der Drucksensoren sind jedoch die erforderlichen langen Sensorleitungen, der erhöhte Montageaufwand und die Beaufschlagung der Drucksensoren sowie ihrer elektrischen Stecker mit Schmutz und Spritzwasser. Eine dezentrale Anordnung der Drucksensoren nahe der Luftfedern ist beispielsweise von einer in der DE 36 38 849 A1 beschriebenen Luftfederungsanlage bekannt.

Alternativ dazu können die Drucksensoren auch entfernt von den Luftfedern in oder an dem jeweiligen Ventilblock angeordnet und am Ausgang des zugeordneten Absperrventils an die Anschlussleitung angeschlossen sein. Vorteilhaft an einer derartigen zentralen Anordnung der Drucksensoren sind die erforderlichen kurzen Sensorleitungen, der geringere Montageaufwand und die vor Schmutz und Spritzwasser weitgehend geschützte Lage der Drucksensoren und ihrer elektrischen Stecker. Diese von den Luftfedern entfernte Anordnung hat jedoch den Nachteil, dass der jeweilige Balgdruck in dem Federbalg der benachbarten Luftfeder, insbesondere während der dynamischen Druckänderungen beim Öffnen und Schließen des zugeordneten Absperrventils, von den Drucksensoren verfälscht erfasst wird. Eine zentrale Anordnung der Drucksensoren in einem neben den Steuerventilen auch ein elektronisches Steuergerät umfassenden Steuerblock einer Luftfederungsanlage ist beispielsweise aus der DE 195 46 324 C2 bekannt.

DE 10 2004 051 740 A1 offenbart ein Verfahren zur Veränderung eines Niveaus eine Nutzfahrzeugs mit Luftfederungsanlage von einem Ist-Niveau auf ein Soll-Niveau. Dazu wird ein Federbalg der Luftfederungsanlage über ein Schaltventil in Öffnungsstellung mit einem zweiten Druckniveau verbunden, das von dem Druckniveau des Federbalgs abweicht. Das zweite Druckniveau kann für ein Belüften des Federbalgs ein Druck in einem Vorratsbehälter sein und kann für ein Entlüften des Federbalgs ein Umgebungsdruck sein. In dem Verfahren wird ein zukünftiger Zeitpunkt ermittelt, zu dem das Schaltventil aus der Öffnungsstellung in eine Sperrstellung zu überführen ist, um das Soll-Niveau zu erreichen. Als maßgeblicher Einflussparameter wird dabei ein Sollwert der Veränderung des Niveaus herangezogen. Weiterhin werden als Einflussparameter ein Ladungszustand des Fahrzeugs, ermittelt über eine Einfederung, ein Beschleunigungsverhalten oder einen Druck in dem Federbalg, und ein Druckwert für das zweite Druckniveau herangezogen. Im Falle der Entlüftung des Federbalgs wird der Umgebungsdruck als Druckwert herangezogen, im Falle der Belüftung der Druck in dem Vorratsbehälter.

Da eine genaue Steuerung der Belüftung und Entlüftung der Federbälge anhand der sensorisch erfassten Luftdrücke nicht möglich ist, lag der Erfindung die Aufgabe zugrunde, ein Verfahren zur Steuerung einer Luftfederungsanlage eines Fahrzeugs der eingangs genannten Bauart vorzustellen, mit dem der Balgdruck in den Federbälgen der Luftfedern dennoch exakt auf einen Zieldruck einstellbar ist.

Diese Aufgabe ist durch ein Verfahren mit den Merkmalen des Anspruchs 1 gelöst. Vorteilhafte Weiterbildungen dieses Verfahrens sind in den abhängigen Ansprüchen definiert.

Demnach betrifft die Erfindung ein Verfahren zum Betreiben eines Fahrzeugs und zur Steuerung einer Luftfederungsanlage für das Fahrzeug, wobei die Luftfederungsanlage für die Luftfedern einer Fahrzeugachse oder mehrerer benachbarter Tandemachsen jeweils ein Umschaltventil sowie für die Luftfeder jedes Fahrzeugrades der Fahrzeugachse beziehungsweise für die Luftfedern jeder Fahrzeugseite der Tandemachsen jeweils ein Absperrventil aufweist, und bei der das jeweilige Umschaltventil sowie die Absperrventile in einem entfernt von den Luftfedern angeordneten Ventilblock baulich zusammengefasst sind, wobei die Luftfederungsanlage für die Messung der Balgdrücke in den Federbälgen der Luftfedern jeweils einen Drucksensor aufweist, welche in oder an dem Ventilblock angeordnet sind, wobei die Drucksensoren jeweils am Ausgang des ihnen zugeordneten Absperrventils an die Anschlussleitung des Federbalgs der zugeordneten Luftfeder beziehungsweise der Federbälge der zugeordneten Luftfedern angeschlossen sind, und bei der mittels der Messwerte der Drucksensoren der Balgdruck in den Federbälgen der Luftfedern exakt auf einen Zieldruck einstellbar ist.

Aufgrund der von den Federbälgen der Luftfedern entfernten Anordnung der Drucksensoren weichen die sensorisch erfassten Luftdrücke, insbesondere auch wegen der durch die Öffnungs- und Schließvorgänge der Absperrventile verursachten Druckspitzen und Druckschwankungen, von den in den Federbälgen der Luftfedern vorliegenden Balgdrücke ab. Um bei einer Belüftung oder Entlüftung von Federbälgen dennoch die vorgesehenen Zieldrücke relativ exakt einstellen zu können, sieht das Verfahren folgende Verfahrensschritte vor:
a) Ermittlung jeweils mindestens einer mit dem Wert eines Vorratsdrucks p_{V} in einem Speicherbehälter für Druckluft normierten Balgdruck-Zeit-Kennlinie p_{B}/p_{V} (t) für die Belüftung und die Entlüftung des Federbalgs einer Luftfeder oder der Federbälge mehrerer Luftfedern,
b) sensorische Messung des aktuellen Balgdruckes p_{B_1} in dem Federbalg der Luftfeder beziehungsweise in den Federbälgen der Luftfedern sowie des aktuellen Vorratsdruckes p_{V_1} unmittelbar vor deren Belüftung oder Entlüftung,
c) Ermittlung der Öffnungsdauer Δtₒ für das zugeordnete Absperrventil mit dem Verhältnis des gemessenen Balgdruckes p_{B_1} zu dem gemessenen Vorratsdruck p_{V_1} und dem Verhältnis des vorgesehenen Zieldruckes p_{B_2} zu dem gemessenen Vorratsdruck p_{V_1} aus der normierten Balgdruck-Zeit-Kennlinie p_{B}/p_{V}(t) für die Belüftung oder Entlüftung,
d) Öffnen des zugeordneten Absperrventils über die ermittelte Öffnungsdauer Δtₒ zur Einstellung des vorgesehenen Zieldruckes p_{B_2}.

Der während der Öffnungsdauer Δtₒ über den zugeordneten Drucksensor messbare, jedoch verfälschte Balgdruck wird bei dem erfindungsgemäßen Verfahren somit nicht verwendet. Durch die Normierung der Balgdrücke p_{B} mit dem Vorratsdruck pv wird der Einfluss eines aufgrund von Versorgungs- und Entnahmeschwankungen unterschiedlich hohen Vorratsdruckes pv auf die Balgdruck-Zeit-Kennlinie p_{B}/p_{V} (t) sowie die jeweilige Öffnungsdauer Δtₒ des zugeordneten Absperrventils eliminiert.

Die normierten Balgdruck-Zeit-Kennlinien p_{B}/p_{V}(t) werden jeweils bevorzugt mit unterschiedlichen Balgdruckverhältnissen p_{B_1}/p_{V_1} vor der Belüftung oder Entlüftung und mit unterschiedlichen Öffnungsdauern Δtₒ des zugeordneten Absperrventils mit jeweils einem Zieldruckverhältnis p_{B_2}/p_{V_1} als Ergebnis ermittelt.

Die normierten Balgdruck-Zeit-Kennlinien p_{B}/p_{V}(t) werden beispielsweise beim Fahrzeughersteller vor der Endkontrolle des jeweiligen Fahrzeugs ermittelt und in einem Datenspeicher eines elektronischen Steuergerätes des Fahrzeugs abgespeichert.

Da sich im laufenden Fahrbetrieb des Fahrzeugs Verschleiß an den Steuerungsventilen und alterungsbedingte Änderungen der Materialeigenschaften der Federbälge einstellen können, ist es sinnvoll, wenn die normierten Balgdruck-Zeit-Kennlinien p_{B}/p_{V}(t) bei Wartungsarbeiten in einer Fachwerkstatt in vorgegebenen Zeit- oder Fahrstreckenintervallen überprüft und bedarfsweise korrigiert werden.

Grundsätzlich werden die normierten Balgdruck-Zeit-Kennlinien p_{B}/p_{V} (t) jeweils in Abhängigkeit von der Länge der Anschlussleitung, des Durchmessers der Anschlussleitung, der vorhandenen Winkel im Verlauf der Anschlussleitung sowie des Volumens des angeschlossenen Federbalgs beziehungsweise der angeschlossenen Federbälge ermittelt. Dadurch ist es möglich, dass die ermittelten Balgdruck-Zeit-Kennlinien p_{B}/p_{V} (t) auf Kombinationen aus Anschlussleitungen und Federbälgen mit gleichen Abmessungen übertragen werden, also die relativ aufwendige Ermittlung der Balgdruck-Zeit-Kennlinien p_{B}/p_{V} (t) an Fahrzeugen mit ähnlicher Ausbildung und Anordnung der Anschlussleitungen vermieden wird.

Da die Balgdruck-Zeit-Kennlinien p_{B}/p_{V} (t) und die daraus bestimmten Öffnungsdauern Δtₒ auch von der Temperatur der Druckluft und der jeweiligen Öffnungskombination des Umschaltventils und der Absperrventile beeinflusst werden können, kann zusätzlich vorgesehen sein, dass für bestimmte Temperaturbereiche der Druckluft und/oder für unterschiedliche Öffnungskombinationen des Umschaltventils und der Absperrventile jeweils separate Balgdruck-Zeit-Kennlinien p_{B}/p_{V}(t) ermittelt werden.

Die Erfindung wird nachstehend anhand eines in der beigefügten Zeichnung dargestellten Ausführungsbeispiels näher erläutert. In der Zeichnung zeigt
Fig. 1 eine Luftfederungsanlage für eine Fahrzeugachse eines Fahrzeugs mit einer zentralen Anordnung von Drucksensoren in einer schematischen Ansicht,
Fig. 2 die Druckverläufe des Balgdruckes eines Federbalgs und des von einem Drucksensor erfassten Druckes über die Zeit während eines Belüftungsvorgangs in einem Diagramm, und
Fig. 3 die Ermittlung der Öffnungsdauer eines Absperrventils für die Belüftung eines Federbalgs anhand einer Kennlinie in einem Diagramm.

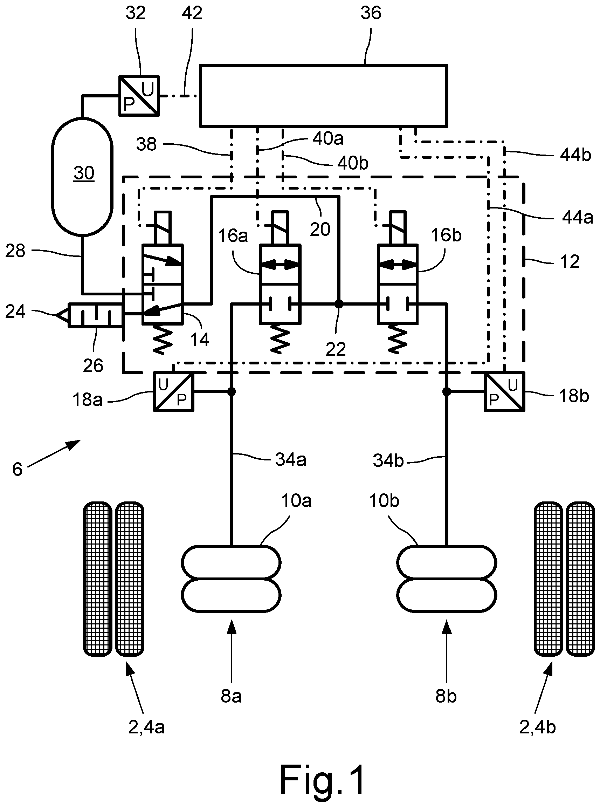

Eine in Fig. 1 schematisch abgebildete Luftfederungsanlage 6 für eine Fahrzeugachse 2 eines Fahrzeugs umfasst jeweils eine Luftfeder 8a, 8b mit einem Federbalg 10a, 10b pro Fahrzeugrad 4a, 4b der Fahrzeugachse 2, einen Ventilblock 12 mit einem als ein 3/2-Wege-Magnetschaltventil ausgebildeten Umschaltventil 14 und jeweils einem als ein 2/2-Wege-Magnetschaltventil ausgebildeten Absperrventil 16a, 16b für die Luftfeder 8a, 8b jedes Fahrzeugrades 4a, 4b sowie jeweils einen Drucksensor 18a, 18b für die Messung des Balgdruckes in jedem der Federbälge 10a, 10b der Luftfedern 8a, 8b.

Mittels des Umschaltventils 14, das über eine elektrische Steuerleitung 38 mit einem elektronischen Steuergerät 36 in Verbindung steht, ist eine Arbeitsdruckleitung 20 wechselweise mit einem mit einem Schalldämpfer 26 versehenen Entlüftungsausgang 24 oder einer druckführenden Vorratsleitung 28 verbindbar. An die Vorratsleitung 28 sind ein Speicherbehälter 30 sowie ein Drucksensor 32 angeschlossen. Der Drucksensor 32 misst den im Speicherbehälter 30 vorhandenen Vorratsdruck pᵥ der dortigen Druckluft und steht über eine elektrische Sensorleitung 42 mit dem elektronischen Steuergerät 36 in Verbindung. Über die beiden Absperrventile 16a, 16b, die eingangsseitig über ein T-Stück 22 an die Arbeitsdruckleitung 20 angeschlossen sind und jeweils über eine elektrische Steuerleitung 40a, 40b mit dem elektronischen Steuergerät 36 in Verbindung sind, ist jeweils eine zu dem Federbalg 10a, 10b der zugeordneten Luftfeder 8a, 8b führende Anschlussleitung 34a, 34b wechselweise mit der Arbeitsdruckleitung 20 verbindbar oder gegenüber dieser absperrbar.

Im unbetätigten, also unbestromten Zustand des Umschaltventils 14 ist die Arbeitsdruckleitung 20 mit dem Entlüftungsausgang 24 verbunden und somit drucklos. Im betätigten, also bestromten Zustand des Umschaltventils 14 ist die Arbeitsdruckleitung 20 mit der Vorratsleitung 28 verbunden und steht somit unter dem im Speicherbehälter 30 vorhandenen Vorratsdruck pᵥ.

Im unbetätigten, also unbestromten Zustand der Absperrventile 16a, 16b sind diese jeweils geschlossen und die Anschlussleitungen 34a, 34b sind dabei gegenüber der Arbeitsdruckleitung 20 abgesperrt. Zur Absenkung des Balgdruckes in dem Federbalg 10a, 10b der zugeordneten Luftfeder 8a, 8b ist nur das Öffnen des betreffenden Absperrventils 16a, 16b erforderlich, wodurch der jeweilige Federbalg 10a, 10b entlüftet wird. Zur Erhöhung des Balgdruckes in dem Federbalg 10a, 10b der zugeordneten Luftfeder 8a, 8b ist dagegen das Umschalten des Umschaltventils 14 und das Öffnen des betreffenden Absperrventils 16a, 16b erforderlich, wodurch der jeweilige Federbalg 10a, 10b belüftet wird.

Die Drucksensoren 18a, 18b sind in oder an dem Ventilblock 12 angeordnet und jeweils am Ausgang des zugeordneten Absperrventils 16a, 16b an die Anschlussleitung 34a, 34b des Federbalgs 10a, 10b der zugeordneten Luftfeder 8a, 8b angeschlossen. Die Drucksensoren 18a, 18b sind als Druck-Spannungs-Wandler ausgebildet und stehen über jeweils eine elektrische Sensorleitung 44a, 44b mit dem elektronischen Steuergerät 36 in Verbindung.

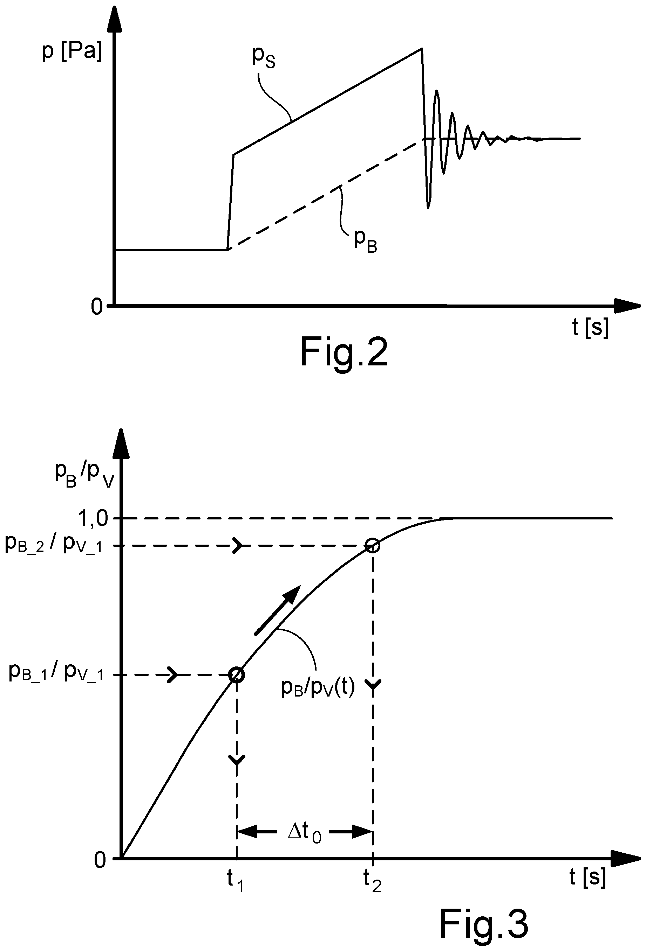

Wie in dem Druck-Zeit-Diagramm der Fig. 2 beispielhaft für eine Belüftung des Federbalgs 10a, 10b einer Luftfeder 8a, 8b veranschaulicht ist, weichen der in dem betreffenden Federbalg 10a, 10b vorliegende Balgdruck p_{B} und der von dem zugeordneten Drucksensor 18a, 18b gemessene, am Ausgang des zugeordneten Absperrventils 16a, 16b vorliegende Luftdruck p_{S} während eines Belüftungsvorgangs über die Zeit t relativ stark voneinander ab, da sich durch das Öffnen und Schließen des betreffenden Absperrventils 16a, 16b an dessen Ausgang Druckspitzen und Druckschwingungen einstellen. Eine genaue Steuerung der Belüftung und Entlüftung der Federbälge 10a, 10b anhand der sensorisch erfassten Luftdrücke p_{S} ist somit nicht möglich.

Zur Lösung dieses Problems dient das nachfolgend beschriebene Steuerungsverfahren, welches in dem Diagramm der Fig. 3 dargestellt ist. Das erfindungsgemäße Verfahren sieht vor, dass unmittelbar vor der Belüftung mindestens eines der Federbälge 10a, 10b der Luftfedern 8a, 8b der aktuelle Balgdruck p_{B_1} in dem betreffenden Federbalg 10a, 10b sowie der aktuelle Vorratsdruck p_{V_1} mittels der Drucksensoren 18a, 18b, 30 gemessen und daraus das Balgdruckverhältnis P_{B_1}/P_{V_1} vor der Belüftung gebildet wird. Die exakte Ermittlung des Balgdruckes p_{B} mit dem zugeordneten Drucksensor 18a, 18b ist möglich, da der Balgdruck p_{B} vor der Belüftung konstant ist und somit der sensorisch erfasste Luftdruck p_{S} mit dem in dem Federbalg 10a, 10b vorliegenden Balgdruck p_{B} identisch ist.

Anschließend wird aus dem vorgesehenen Zieldruck p_{B_2}, auf den der Federbalg 10a, 10b belüftet werden soll, und dem sensorisch erfassten Vorratsdruck p_{V_1} das Zieldruckverhältnis p_{B_2}/p_{V_1} gebildet. Mit dem Balgdruckverhältnis P_{B_1}/P_{V_1} und dem Zieldruckverhältnis p_{B_2}/p_{V_1} wird sodann aus einer zuvor ermittelten, mit dem Vorratsdruck pv normierten Balgdruck-Zeit-Kennlinie P_{B}/P_{V}(t) die Öffnungsdauer Δtₒ zwischen zwei Zeitpunkten t₁ und t₂ bestimmt, über die nach dem Umschalten des Umschaltventils 14 das zugeordnete Absperrventil 16a, 16b geöffnet werden muss, um den Balgdruck p_{B} in dem betreffenden Federbalg 10a, 10b von dem Balgdruck p_{B_1} vor der Belüftung auf den Zieldruck p_{B_2} nach der Belüftung zu erhöhen.

Im nächsten Schritt wird das Umschaltventil 14 umgeschaltet und das zugeordnete Absperrventil 16a, 16b über die ermittelte Öffnungsdauer Δtₒ geöffnet. Die Einstellung des Zieldruckes p_{B_2} in dem betreffenden Federbalg 10a, 10b erfolgt relativ genau, weil der mit dem zugeordneten Drucksensor 18a, 18b messbare Luftdruck p_{S}, der während des Belüftungsvorgangs von dem Balgdruck p_{B} in dem Federbalg 10a, 10b abweicht, nicht berücksichtigt wird.

Für die Belüftung und die Entlüftung des Federbalgs einer Luftfeder wird jeweils mindestens eine mit dem Vorratsdruck p_{V} normierte Balgdruck-Zeit-Kennlinie p_{B}/p_{V} (t) ermittelt. Die Balgdruck-Zeit-Kennlinien p_{B}/p_{V} (t) werden bevorzugt beim Fahrzeughersteller vor der Endkontrolle des jeweiligen Fahrzeugs ermittelt und in einem Datenspeicher des elektronischen Steuergerätes 36 abgespeichert.

### Bezugszeichenliste (Teil der Beschreibung)

- 2: Fahrzeugachse
- 4a, 4b: Fahrzeugräder
- 6: Luftfederungsanlage
- 8a, 8b: Luftfedern
- 10a, 10b: Federbälge
- 12: Ventilblock
- 14: Umschaltventil
- 16a, 16b: Absperrventile
- 18a, 18b: Drucksensoren
- 20: Arbeitsdruckleitung
- 22: T-Stück
- 24: Entlüftungsausgang
- 26: Schalldämpfer
- 28: Vorratsleitung
- 30: Speicherbehälter
- 32: Drucksensor
- 34a, 34b: Anschlussleitungen
- 36: Elektronisches Steuergerät
- 38: Steuerleitung
- 40a, 40b: Steuerleitungen
- 42: Sensorleitung
- 44a, 44b: Sensorleitungen
- p: Druck
- p_{B}: Balgdruck
- p_{B}/p_{V}: Normierter Balgdruck, Balgdruckverhältnis
- p_{B_1}: aktueller Balgdruck
- p_{B_1/}p_{V_1}: Balgdruckverhältnis vor Belüftung oder Entlüftung
- p_{B}/p_{V} (t): Balgdruck-Zeit-Kennlinie
- p_{B_2}: Zieldruck
- p_{B_2}/p_{V_1}: Zieldruckverhältnis
- p_{S}: Sensorisch erfasster Luftdruck
- p_{V}: Vorratsdruck
- p_{V_1}: Aktueller Vorratsdruck
- t: Zeit
- t₁: Zeitpunkt, öffnen
- t₂: Zeitpunkt, schließen
- Δtₒ: Öffnungsdauer

## Patentansprüche

1. Verfahren zum Betreiben eines Fahrzeugs und zur Steuerung einer Luftfederungsanlage für das Fahrzeug, wobei die Luftfederungsanlage für die Luftfedern (8a, 8b) einer Fahrzeugachse (2) oder mehrerer benachbarter Tandemachsen jeweils ein Umschaltventil (14) sowie für die Luftfeder (8a, 8b) jedes Fahrzeugrades (4a, 4b) der Fahrzeugachse (2) beziehungsweise für die Luftfedern jeder Fahrzeugseite der Tandemachsen jeweils ein Absperrventil (16a, 16b) aufweist, und bei der das jeweilige Umschaltventil (14) sowie die Absperrventile (16a, 16b) in einem entfernt von den Luftfedern (8a, 8b) angeordneten Ventilblock (12) baulich zusammengefasst sind, wobei die Luftfederungsanlage für die Messung der Balgdrücke in den Federbälgen (10a, 10b) der Luftfedern (8a, 8b) jeweils einen Drucksensor (18a, 18b) aufweist, welche in oder an dem Ventilblock (12) angeordnet sind, wobei die Drucksensoren (18a, 18b) jeweils am Ausgang des ihnen zugeordneten Absperrventils (16a, 16b) an die Anschlussleitung (34a, 34b) des Federbalgs (10a, 10b) der zugeordneten Luftfeder (8a, 8b) beziehungsweise der Federbälge der zugeordneten Luftfedern angeschlossen sind, und bei der mittels der Messwerte der Drucksensoren (18a, 18b) der Balgdruck (p_{B}) in den Federbälgen (10a, 10b) der Luftfedern (8a, 8b) exakt auf einen Zieldruck (p_{B_2}) einstellbar ist, wobei das Verfahren folgende Verfahrensschritte aufweist:
a) Ermittlung jeweils mindestens einer mit dem Wert eines Vorratsdrucks (pv) in einem Speicherbehälter (30) für Druckluft normierten Balgdruck-Zeit-Kennlinie (p_{B}/p_{V} (t)) für die Belüftung und die Entlüftung des Federbalgs (10a, 10b) einer Luftfeder (8a, 8b) oder der Federbälge mehrerer Luftfedern,
b) sensorische Messung des aktuellen Balgdruckes (p_{B_1}) in dem Federbalg (10a, 10b) der Luftfeder (8a, 8b) beziehungsweise in den Federbälgen der Luftfedern sowie des aktuellen Vorratsdruckes (p_{V_1}) unmittelbar vor deren Belüftung oder Entlüftung,
c) Ermittlung der Öffnungsdauer (Δtₒ) für das zugeordnete Absperrventil (16a, 16b) mit dem Verhältnis des gemessenen Balgdruckes (p_{B_1}) zu dem gemessenen Vorratsdruck (p_{V_1}) und dem Verhältnis des vorgesehenen Zieldruckes (p_{B_2}) zu dem gemessenen Vorratsdruck (p_{V_1}) aus der normierten Balgdruck-Zeit-Kennlinie (p_{B}/p_{V}(t)) für die Belüftung oder Entlüftung,
d) Öffnen des zugeordneten Absperrventils (16a, 16b) über die ermittelte Öffnungsdauer (Δtₒ) zur Einstellung des vorgesehenen Zieldruckes (p_{B_2}).

2. Verfahren nach Anspruch 1, **dadurch gekennzeichnet, dass** die normierten Balgdruck-Zeit-Kennlinien (p_{B}/p_{V} (t)) jeweils mit unterschiedlichen Balgdruckverhältnissen (p_{B_1}/p_{V_1}) vor der Belüftung oder Entlüftung und mit unterschiedlichen Öffnungsdauern (Δtₒ) des zugeordneten Absperrventils (16a, 16b) mit jeweils einem Zieldruckverhältnis (p_{B_2}/p_{V_1}) als Ergebnis ermittelt werden.

3. Verfahren nach Anspruch 1 oder 2, **dadurch gekennzeichnet, dass** die normierten Balgdruck-Zeit-Kennlinien (p_{B}/p_{V}(t)) beim Fahrzeughersteller vor der Endkontrolle des jeweiligen Fahrzeugs ermittelt und in einem Datenspeicher eines elektronischen Steuergerätes (36) des Fahrzeugs abgespeichert werden.

4. Verfahren nach einem der Ansprüche 1 bis 3, **dadurch gekennzeichnet, dass** die normierten Balgdruck-Zeit-Kennlinien (p_{B}/p_{V} (t)) bei Wartungsarbeiten in einer Fachwerkstatt in vorgegebenen Zeit- oder Fahrstreckenintervallen überprüft und bedarfsweise korrigiert werden.

5. Verfahren nach einem der Ansprüche 1 bis 4, **dadurch gekennzeichnet, dass** die normierten Balgdruck-Zeit-Kennlinien (p_{B}/p_{V}(t)) jeweils in Abhängigkeit von der Länge der Anschlussleitung (34a, 34b), des Durchmessers der jeweiligen Anschlussleitung (34a, 34b), der vorhandenen Winkel im Verlauf der Anschlussleitung (34a, 34b) sowie des Volumens des angeschlossenen Federbalgs (10a, 10b) beziehungsweise der angeschlossenen Federbälge ermittelt werden.

6. Verfahren nach Anspruch 5, **dadurch gekennzeichnet, dass** die ermittelten Balgdruck-Zeit-Kennlinien (p_{B}/p_{V}(t)) auf Kombinationen aus Anschlussleitungen (34a, 34b) und Federbälgen (10a, 10b) mit gleichen Abmessungen übertragen werden.

7. Verfahren nach einem der Ansprüche 1 bis 6, **dadurch gekennzeichnet, dass** für bestimmte Temperaturbereiche der Druckluft und/oder für unterschiedliche Öffnungskombinationen des Umschaltventils (14) und der Absperrventile (16a, 16b) jeweils separate Balgdruck-Zeit-Kennlinien (p_{B}/p_{V} (t)) ermittelt werden.

## Claims

1. Method for operating a vehicle and for controlling a pneumatic suspension system for the vehicle, wherein the pneumatic suspension system in each case has a changeover valve (14) for the pneumatic springs (8a, 8b) of a vehicle axle (2) or of a plurality of adjacent tandem axles, and a shutoff valve (16a, 16b) for the pneumatic spring (8a, 8b) of each vehicle wheel (4a, 4b) of the vehicle axle (2) or for the pneumatic springs of each vehicle side of the tandem axles, and in which the relevant changeover valve (14) and the shutoff valves (16a, 16b) are structurally combined in a valve block (12) arranged remotely from the pneumatic springs (8a, 8b), wherein the pneumatic suspension system, for measuring the bellows pressures in the spring bellows (10a, 10b) of the pneumatic springs (8a, 8b), in each case has a pressure sensor (18a, 18b), which sensors are arranged in or on the valve block (12), wherein the pressure sensors (18a, 18b) are each connected, at an outlet of the associated shutoff valve (16a, 16b), to the connection line (34a, 34b) of the spring bellows (10a, 10b) of the associated pneumatic spring (8a, 8b) or the spring bellows of the associated pneumatic springs, and in which the bellows pressure (p_{B}) in the spring bellows (10a, 10b) of the pneumatic springs (8a, 8b) can be set exactly to a target pressure (p_{B_2}) by means of measured values of the pressure sensors (18a, 18b), wherein the method comprises the following method steps:
a) determining in each case at least one bellows pressure-time characteristic curve (p_{B}/p_{V}(t)), which is standardized with the value of a supply pressure (pv) in a storage tank (30) for compressed air, for air admission to and air release from the spring bellows (10a, 10b) of a pneumatic spring (8a, 8b) or the spring bellows of a plurality of pneumatic springs,
b) measuring via a sensor the current bellows pressure (p_{B_1}) in the spring bellows (10a, 10b) of the pneumatic spring (8a, 8b) or in the spring bellows of the pneumatic springs as well as the current supply pressure (p_{V_1}) immediately before air admission thereto or air release therefrom,
c) determining, from the standardized bellows pressure-time characteristic curve (p_{B}/p_{V}(t)) for air admission or air release, the opening duration (Δt₀) for the corresponding shutoff valve (16a, 16b) using the ratio of the measured bellows pressure (p_{B_1}) to the measured supply pressure (p_{V_1}) and the ratio of the provided target pressure (p_{B_2}) to the measured supply pressure (p_{V_1}),
d) opening the corresponding shutoff valve (16a, 16b) for the determined opening duration (Δtₒ) in order to set the provided target pressure (p_{B_2}).

2. Method according to claim 1, **characterized in that** the standardized bellows-pressure time characteristic curves (p_{B}/p_{V}(t)) are each determined using different bellows pressure ratios (p_{B_1}/p_{V_1}) before air admission or air release and using different opening durations (Δtₒ) of the associated shutoff valve (16a, 16b) with a relevant target pressure ratio (P_{B_2}/p_{V_1}) as a result.

3. Method according to either claim 1 or claim 2, **characterized in that** the standardized bellows pressure-time characteristic curves (p_{B}/p_{V}(t)) are determined at the vehicle manufacturer before the final inspection of the relevant vehicle and are stored in a data memory of an electronic control unit (36) of the vehicle.

4. Method according to any of claims 1 to 3, **characterized in that** the standardized bellows pressure-time characteristic curves (p_{B}/p_{V}(t)) are checked at predetermined time or mileage intervals during servicing work at a specialist workshop and are corrected if necessary.

5. Method according to any of claims 1 to 4, **characterized in that** the standardized bellows pressure-time characteristic curves (p_{B}/p_{V}(t)) are each determined depending on the length of the connection line (34a, 34b), the diameter of the relevant connection line (34a, 34b), the existing angle in the course of the connection line (34a, 34b) and the volume of the one or more connected spring bellows (10a, 10b).

6. Method according to claim 5, **characterized in that** the determined bellows-pressure time characteristic curves (p_{B}/p_{V}(t)) are transmitted to combinations of connection lines (34a, 34b) and spring bellows (10a, 10b) that have the same dimensions.

7. Method according to any of claims 1 to 6, **characterized in that** separate bellows pressure-time characteristic curves (p_{B}/p_{V}(t)) are determined in each case for certain temperature ranges of the compressed air and/or for different opening combinations of the changeover valve (14) and the shutoff valves (16a, 16b).

## Revendications

1. Procédé permettant de faire fonctionner un véhicule et de commander une suspension pneumatique pour le véhicule, dans lequel la suspension pneumatique présente respectivement une vanne d'inversion (14) pour des ressorts pneumatiques (8a, 8b) d'un essieu de véhicule (2) ou pour plusieurs essieux tandem adjacents, ainsi que respectivement une vanne d'arrêt (16a, 16b) pour les ressorts pneumatiques (8a, 8b) de chaque roue de véhicule (4a, 4b) de l'essieu de véhicule (2) et/ou pour les ressorts pneumatiques de chaque côté de véhicule des essieux tandem, et la vanne d'inversion (14) respective ainsi que les vannes d'arrêt (16a, 16b) respectives sont structurellement regroupées dans un bloc de vannes (12) disposé à distance des ressorts pneumatiques (8a, 8b), dans lequel la suspension pneumatique présente respectivement un capteur de pression (18a, 18b) pour la mesure des pressions de soufflet dans les soufflets à ressort (10a, 10b) des ressorts pneumatiques (8a, 8b), lesquels capteurs de pression sont disposés dans ou sur le bloc de vannes (12), dans lequel les capteurs de pression (18a, 18b) sont respectivement raccordés, à la sortie de la vanne d'arrêt (16a, 16b) qui est associée à ceux-ci, à une conduite de raccordement (34a, 34b) du soufflet à ressort (10a, 10b) des ressorts pneumatiques (8a, 8b) associés et/ou des soufflets à ressort des ressorts pneumatiques associés, et dans lequel la pression de soufflet (p_{B}) dans les soufflets à ressort (10a, 10b) des ressorts pneumatiques (8a, 8b) peut être réglée avec précision sur une pression cible (p_{B_2}) à l'aide des valeurs de mesure des capteurs de pression (18a, 18b), dans lequel le procédé présente les étapes de procédé suivantes :
a) détermination respectivement d'au moins d'une caractéristique pression de soufflet/temps (p_{B}/p_{V}(t)) normalisée pour la ventilation et l'aération du soufflet à ressort (10a, 10b) d'un ressort pneumatique (8a, 8b) ou des soufflets à ressort de plusieurs ressorts pneumatiques, grâce à la valeur d'une pression de réserve (pv) dans un réservoir de stockage (30) d'air comprimé,
b) mesure par capteur de la pression de soufflet réelle (p_{B_1}) dans le soufflet à ressort (10a, 10b) des ressorts pneumatiques (8a, 8b) et/ou dans les soufflets à ressort des ressorts pneumatiques ainsi que de la pression de réserve réelle (p_{V_1}), immédiatement avant la ventilation ou l'aération desdits soufflets à ressort,
c) détermination, à partir de la caractéristique pression de soufflet/temps (p_{B}/p_{V}(t)) normalisée pour la ventilation et l'aération, de la durée d'ouverture (Δt₀) de la vanne d'arrêt (16a, 16b) associée grâce au rapport de la pression de soufflet (p_{B_1}) mesurée à la pression de réserve (p_{V_1}) mesurée et au rapport de la pression cible (p_{B_2}) prévue à la pression de réserve (p_{V_1}) mesurée,
d) ouverture de la vanne d'arrêt (16a, 16b) associée pendant la durée d'ouverture déterminée (Δtₒ) pour le réglage de la pression cible (p_{B_2}) prévue.

2. Procédé selon la revendication 1, **caractérisé en ce que** les caractéristiques pression de soufflet/temps (p_{B}/p_{V}(t)) normalisées sont déterminées respectivement avec différents rapports de pression de soufflet (p_{B_1}/p_{V_1}) avant la ventilation ou l'aération et avec différentes durées d'ouverture (Δtₒ) de la vanne d'arrêt (16a, 16b) associée, avec respectivement un rapport de pression cible (P_{B_2}/p_{V_1}) comme résultat.

3. Procédé selon la revendication 1 ou 2, **caractérisé en ce que** les caractéristiques pression de soufflet/temps (p_{B}/p_{V}(t)) normalisées sont déterminées par le fabricant du véhicule avant le contrôle final du véhicule respectif, et mémorisées dans une mémoire de données d'un appareil de commande (36) électronique du véhicule.

4. Procédé selon l'une des revendications 1 à 3, **caractérisé en ce que** les caractéristiques pression de soufflet/temps (p_{B}/p_{V}(t)) normalisées sont vérifiées lors de travaux d'entretien dans un garage spécialisé à des intervalles de temps et de trajet prédéfinis, et corrigés en fonction des besoins.

5. Procédé selon l'une des revendications 1 à 4, **caractérisé en ce que** les caractéristiques pression de soufflet/temps (p_{B}/p_{V}(t)) normalisées sont déterminées en fonction de la longueur de la conduite de raccordement (34a, 34b), du diamètre de la conduite de raccordement (34a, 34b) respective, de l'angle existant le long de la conduite de raccordement (34a, 34b) ainsi que du volume du soufflet à ressort (10a, 10b) raccordé et/ou des soufflets à ressort raccordés.

6. Procédé selon la revendication 5, **caractérisé en ce que** les caractéristiques pression de soufflet/temps (p_{B}/p_{V}(t)) déterminées sont transférées sur des combinaisons de conduites de raccordement (34a, 34b) et de soufflets à ressort (10a, 10b) comportant des dimensions identiques.

7. Procédé selon l'une des revendications 1 à 6, **caractérisé en ce que** des caractéristiques pression de soufflet/temps (p_{B}/p_{V}(t)) distinctes sont déterminées pour certaines plages de température de l'air comprimé et/ou pour différentes combinaisons d'ouvertures de la soupape d'inversion (14) et des soupapes d'arrêt (16a, 16b).
